# FASCICULE DE BREVET EUROPEEN

(11) **EP 2 370 787 B1**
(45) Date de publication et mention de la délivrance du brevet: **08.04.2020**
(21) Numéro de dépôt: 09748354.9
(22) Date de dépôt: 10.11.2009
(51) Int. Cl.: G01C 23/00, G05D 1/00

(54) **INSTRUMENT D'AIDE À LA NAVIGATION POUR AÉRONEF**
NAVIGATIONS-HILFSINSTRUMENT FÜR EIN FLUGZEUG
NAVIGATION ASSISTANCE INSTRUMENT FOR AN AIRCRAFT

(30) Priorité: 25.11.2008 EP 08169905
(43) Date de publication de la demande: 05.10.2011
(60) Demande divisionnaire: 12150170.4
(73) Titulaire: Omega SA, 2500 Biel/ Bienne 4 (CH)
(72) Inventeur: NICOLLIER, Claude, 1015 Lausanne (CH); FLEURY, Emmanuel, 2740 Moutier (CH); GALLI, Reto, 3053 Münchenbuchsee (CH)
(74) Mandataire: Giraud, Eric
(86) Numéro de dépôt international: PCT/EP2009/064927
(87) Numéro de publication internationale: WO 2010/060792

(56) Documents cités:
- EP-A1- 2 128 732
- WO-A-95/15499
- WO-A-2007/005658
- FR-A1- 2 827 378
- GB-A- 2 127 656
- US-A- 4 663 627
- US-A- 5 359 326
- US-A1- 2006 212 182

## Description

La présente invention concerne un instrument d'aide à la navigation pour un aéronef. Plus précisément, l'invention concerne un instrument pour aider le pilote d'un aéronef durant les phases d'approche et d'atterrissage.

Le projet baptisé Solar Impulse a pour but de faire voler un avion mû uniquement grâce à l'énergie solaire captée par une multitude de cellules photoélectriques réparties sur toute la surface de l'appareil. Pour relever ce défi, l'appareil devra être très léger et présenter une grande envergure, typiquement de l'ordre de 61 mètres, soit une envergure comparable à celle d'un Airbus A-340 qui pèse quant à lui plusieurs centaines de tonnes.

Inutile de dire qu'il existe de grandes différences de pilotage entre ces deux types d'appareils. Sans entrer dans les détails, il faut noter que les phases d'approche et d'atterrissage sont fondamentalement différentes selon que l'on pilote l'un ou l'autre type d'appareil. Un avion grand et lourd, fortement motorisé, a des contraintes nettement moindres lors de son approche et de la phase finale de l'atterrissage. De fait, le vent de travers, même relativement fort, ne pose pas de gros problèmes de stabilité, tout comme l'angle d'approche peut facilement être corrigé grâce à la faculté qu'ont les pilotes de remettre les gaz et de négocier un léger virage. Cela étant, même si la technique et la puissance d'un gros porteur offrent une marge de sécurité relativement importante, l'approche finale et l'atterrissage n'en restent pas moins des phases de vol délicates requérant toute l'attention des pilotes qui doivent gérer un grand nombre de paramètres dans un faible laps de temps.

Le pilote de Solar Impulse, tout en devant gérer les mêmes paramètres que dans un avion classique, n'aura pas à sa disposition une réserve de puissance lui permettant d'opérer facilement une correction de trajectoire, notamment dans les derniers hectomètres précédent le touché de la piste. Or, à cause de son poids extrêmement réduit et de sa grande envergure, l'appareil sera très sensible au vent latéral et n'aura qu'une possibilité très réduite de manœuvre lors de l'approche finale. Il fallait dont trouver un moyen pour donner au pilote des informations relatives à son angle d'approche et à l'inclinaison des ailes de son appareil.

Au sujet de l'angle d'approche, on peut dire que lorsqu'un avion veut atterrir, il se dirige normalement vers le seuil de la piste en ligne droite. Mais il est bien sûr sensible au vent de travers qui peut le faire dévier de sa trajectoire. C'est ainsi qu'en cas de vent de travers, le pilote, s'il regarde droit devant lui, constatera que la piste est légèrement soit sur la gauche, soit sur la droite par rapport au nez de son appareil. Grâce à la puissance de ses moteurs, le pilote d'un avion classique peut corriger l'angle entre la trajectoire rectiligne et le seuil de la piste.

Pour un aéronef du type Solar Impulse, le pilote ne dispose pas de réserve de puissance et il doit donc préparer l'approche en respectant au mieux la ligne droite ou alors en anticipant dès que possible la dérive de son appareil due au vent de travers. Pour cela, il faut que le pilote, par ailleurs fort occupé aux autres manœuvres d'approche, puisse facilement se rendre compte de la correction qu'il doit apporter à sa trajectoire pour aborder correctement le seuil de piste. De plus, il doit aussi pouvoir savoir si son aile est parfaitement horizontale car, comme elle est très grande, elle risque de toucher la piste au moment de l'atterrissage si elle st trop inclinée d'un côté ou de l'autre. Or, il faut se rendre compte qu'avec une aile de 61 mètres d'envergure, il est pratiquement impossible pour le pilote de visualiser une inclinaison des ailes d'un ou deux mètres par rapport à l'horizontale parfaite.

Le document WO 95/15499 décrit un instrument d'aide à la navigation pour le pilote d'un aéronef comprenant un dispositif d'affichage s'étendant horizontalement, un marqueur mobile apte à se déplacer de part et d'autre du centre du dispositif d'affichage indiquant la direction de vol de l'aéronef par rapport au sol.

Le document US 5,359,326 décrit un instrument d'aide à la navigation pour le pilote d'un aéronef comprenant un dispositif d'affichage s'étendant horizontalement, une rangée de diodes électroluminescentes affichant seulement l'angle de dérapage.

Le document FR 2827378 A1 décrit un aéronef équipé avec un écran à cristaux liquides qui affiche un repère matérialisant un angle de dérapage nul et des graduations permettant de matérialiser différentes valeurs numériques de l'angle de dérapage.

La présente invention a pour but de répondre aux besoins mentionnés ci-dessus en procurant un instrument d'aide à la navigation qui permette au pilote d'un aéronef d'apprécier d'un simple coup d'œil son écart par rapport à la direction rectiligne qui doit l'amener au seuil de la piste.

A cet effet, la présente invention concerne un instrument d'aide à la navigation pour le pilote d'un aéronef selon la revendication 1 annexée.

Selon une caractéristique complémentaire de l'invention, le marqueur mobile se déplace sur une échelle comprise entre -15° et + 15°.

Selon un mode particulier de réalisation de l'invention, le dispositif d'affichage est réalisé au moyen d'une rangée de diodes électroluminescentes, le centre de cette rangée de diodes matérialisant l'axe longitudinal de l'aéronef, une diode de la rangée de diodes s'éclairant à droite ou à gauche de la diode centrale pour indiquer au pilote la direction de vol de l'aéronef par rapport au sol. La résolution de l'affichage fourni par la rangée de diodes sera au moins de ± 1° et préférentiellement de ± 0,4°. On comprendra que cette résolution n'est pas absolue. Elle dépend de la distance entre la tête du pilote et l'instrument. Ainsi, il est même possible que la résolution ne soit pas la même pour différents pilotes. Une diode de la rangée de diodes indiquera un écart d'un degré entre l'axe longitudinal de l'aéronef et la composante horizontale du vecteur vitesse de cet aéronef.

D'autres caractéristiques et avantages de la présente invention ressortiront plus clairement de la description détaillée qui suit d'un exemple de réalisation de l'instrument d'aide à la navigation selon l'invention, cet exemple étant donné à titre purement illustratif et non limitatif seulement en liaison avec le dessin annexé sur lequel :
- la figure 1 est une vue en perspective d'un aéronef équipé de l'instrument d'aide à la navigation selon l'invention ;
- la figure 2 est une vue schématique de l'instrument d'aide à la navigation comprenant une rangée horizontale de diodes électroluminescentes pour l'indication d'un écart entre l'axe longitudinal de l'aéronef et la composante horizontale du vecteur vitesse de cet aéronef ainsi que deux rangées verticales de diodes électroluminescentes pour l'indication de l'inclinaison des ailes de l'aéronef par rapport à l'horizontale du côté gauche ou droit dudit aéronef, et
- la figure 3 est une vue analogue à celle de la figure 2, les indicateurs à diodes électroluminescentes étant remplacés par des cellules d'affichage à cristaux liquides.

L'angle que fait la direction de vol de l'avion par rapport au sol doit être contrôlé de manière très précise. Il est parfois difficile de déterminer dans quelle direction l'avion se déplace, ce qui augmente significativement la charge de travail du pilote, notamment durant les phases d'approche. La faible vitesse de l'appareil et son angle de dérapage élevé même avec un vent de travers modéré apportent une difficulté supplémentaire. Un tableau de bord classique ne fournit pas d'informations précises concernant la direction du vecteur vitesse pour réaliser de manière appropriée toutes les phases de vol. Il a donc été jugé nécessaire de procurer un instrument fournissant un affichage de ce paramètre facile à lire, en particulier une indication précise de la direction de vol par rapport au sol, pour assister le pilote durant l'approche finale d'atterrissage.

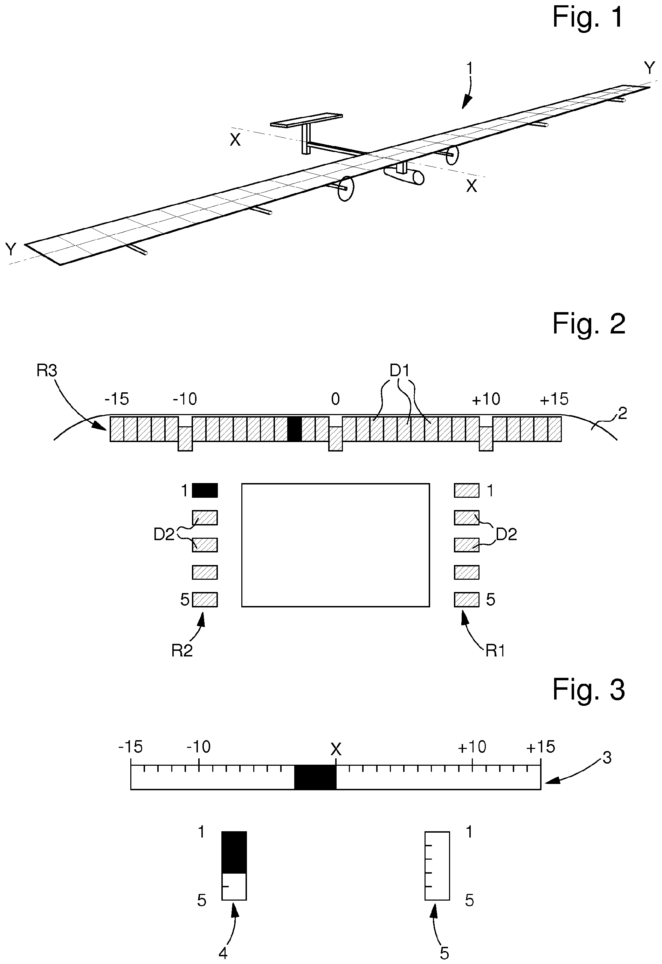

On désignera par (Φ) l'angle d'inclinaison, c'est-à-dire l'angle entre l'axe transversal (Y) de l'avion 1 (figure 1) et le plan horizontal. Φ est positif lorsque l'appareil s'incline vers la droite. Par ailleurs, on désignera par (β) l'angle de dérapage, autrement dit l'angle entre l'axe longitudinal (X) de l'appareil et la composante horizontale du vecteur vitesse de l'air. β est positif du côté droit de l'axe longitudinal X de l'appareil. Enfin, on désignera par (Ω) l'angle de dérive, c'est-à-dire l'angle entre la composante horizontale du vecteur vitesse de l'air et la piste au sol. Ω est positif à la droite du vecteur vitesse de l'air.

La fonction principale de l'instrument d'aide à la navigation pour aéronef est de procurer une vue nette de l'angle d'inclinaison Φ de l'appareil avec une précision d'un degré pour les cinq premiers degrés d'inclinaison positive ou négative. Au-delà de 5 degrés, l'angle d'inclinaison n'a plus besoin d'être indiqué par l'instrument étant donné qu'il devient appréciable avec une précision suffisante grâce aux instruments du tableau de bord classique. La fonction de l'instrument d'aide à la navigation pour aéronef selon l'invention est de permettre au pilote de contrôler et de corriger la direction de vol par rapport au sol, autrement dit l'angle résultant de la somme de l'angle de dérapage β et de l'angle de dérive Ω. On n'affichera que la composante horizontale du vecteur vitesse, ce qui permettra au pilote d'être informé de sa direction de vol azimutale, mais pas en élévation. Enfin, l'instrument doit pouvoir avertir le pilote lorsque l'angle d'inclinaison Φ atteint 6° (cette valeur peut être ajustée en fonction des besoins). Cette alarme doit être visuelle et également sensorielle. A cet effet, l'alarme se produira également dans les manchons vibreurs de la combinaison de vol du pilote. En d'autres termes, si l'aile penche trop à droite, le manchon droit va vibrer, indiquant au pilote qu'il doit corriger l'inclinaison de l'aile sur la gauche.

Le pilote doit pouvoir être informé de tous les paramètres mentionnés ci-dessus (angle d'inclinaison et direction de vol) de manière claire et sans source d'erreur possible, et ce de jour comme de nuit. Un dimensionnement approprié et un choix judicieux des couleurs et des symboles permet d'atteindre cet objectif.

L'instrument d'aide à la navigation est basé sur des rangées de diodes électroluminescentes de couleur disposées sur le tableau de bord. La figure 2 ci-dessous illustre l'agencement désiré.

Les rangées de diodes électroluminescentes indiquant l'angle d'inclinaison et la direction de vol sont disposées sur la partie supérieure du tableau de bord 2. Les diodes D2 dédiées à l'indication de l'angle d'inclinaison sont espacées les unes des autres par un intervalle de 5 mm. Elles sont au nombre de cinq par rangée, à savoir une diode par degré d'inclinaison.

Une indication précise de l'angle d'inclinaison est fournie par deux rangées verticales de diodes électroluminescentes droite R1 et gauche R2. Une ou plusieurs diodes, à savoir une diode par degré d'inclinaison, qui jouent le rôle de marqueur mobile en produisant une lumière bleue vive vont s'illuminer successivement pour indiquer une inclinaison du côté gauche ou du côté droit de l'aile sous l'horizon. Ainsi, si l'avion vole de manière parfaitement horizontale, aucune diode D2 ne sera allumée. Par contre, si l'aile droite de l'appareil est inclinée de 3°, trois diodes D2 de la rangée de droite R1 vont s'allumer successivement et rester allumées jusqu'à ce que le pilote ait rétabli l'assiette de l'avion par une correction d'inclinaison en sens opposé. L'angle d'inclinaison est affiché sur une plage de ± 5°. Le nombre de diodes D2 éclairées depuis le haut d'une rangée R1, R2 indique la valeur de l'angle en degrés jusqu'à 5°. Dans l'exemple représenté au dessin, la première diode en partant du haut de la rangée R2 de diodes D2 est éclairée, indiquant une inclinaison de 1° des ailes de l'avion du côté gauche.

Si l'angle d'inclinaison atteint 6° ou plus (valeur ajustable), toute la rangée de cinq diodes du côté droit ou gauche concerné va se mettre à clignoter à une fréquence de 2 Hz et le signal destiné à produire l'alarme dans le manchon vibreur de la combinaison de vol du pilote va être généré.

Les diodes D1 destinées à fournir une indication précise de la direction de vol sont disposées selon une rangée horizontale R3 disposée au dessus des deux rangées R1 et R2 de diodes D2. La précision de lecture de la direction de vol ne doit pas être inférieure à 1°. On prévoit à cet effet une diode D1 pour chaque degré de déviation de la direction de vol de l'aéronef par rapport au sol. La rangée horizontale R3 de diodes D1 présentera une couleur de fond bleue pâle duquel se détachera une diode D1 jouant le rôle de marqueur mobile en indiquant en vert brillant la direction de la composante horizontale du vecteur vitesse par rapport au sol. Pour l'indication de la direction du vecteur vitesse, la plage de mesure sera de ± 15° en considérant que les yeux du pilote sont à environ 70 cm du tableau de bord 2 et que la partie supérieure droite de ce dernier mesure 35 cm. Pour des directions de vol supérieures à 15° par rapport à l'axe longitudinal de l'appareil, l'éclairage de la diode de couleur verte restera permanent à la fin de la rangée R3 de diodes D1 du côté approprié. On peut prévoir (voir figure 2) de décaler la diode marquant le zéro de la rangée R3 de diodes D1 et les diodes marquant -10° et +10° de cette même rangée R3 de diodes D1 par exemple vers le bas pour fournir des repères visuels au pilote. Sur l'exemple représenté au dessin, on voit que la troisième diode en partant du centre de la rangée R3 de diodes D1 sur la gauche de cette dernière est éclairée, indiquant ainsi un écart de -3° de l'axe longitudinal X de l'appareil par rapport à la direction de vol rectiligne.

En vol, toutes les diodes seront sombres, à l'exception de :
- la rangée horizontale R3 de diodes D1 sera toujours illuminée selon une couleur bleue pâle, fournissant ainsi au pilote un axe latéral de référence ;
- une diode D1 de la rangée horizontale R3 de diodes indiquera en vert vif la direction de vol (si l'appareil vole de manière parfaitement rectiligne, seule la diode D1 au centre de la rangée R3 sera éclairée) ;
- les deux rangées verticales R1 et R2 de diodes D2 indiqueront par une couleur bleue vive la valeur de l'angle d'inclinaison jusqu'à 5°. Les cinq diodes D2 d'une rangée donnée clignoteront en bleu pour un angle d'inclinaison égal ou supérieur à 6°.

On prévoit deux gradateurs, l'un pour ajuster la couleur de fond bleu pâle de la rangée horizontale R3 de diodes D1, et l'autre pour régler la luminosité de l'indicateur vert plus brillant du vecteur vitesse et de l'indicateur bleu plus brillant de l'angle d'inclinaison.

On comprendra que les dispositifs d'aide à la navigation, basés sur l'utilisation de rangées de diodes électroluminescentes, pourraient être remplacés par exemple par des dispositifs d'affichage à cristaux liquides. Ainsi, on pourrait prévoir un affichage à cristaux liquides 3 de forme rectiligne allongée disposé horizontalement indiquant la direction de vol de l'aéronef par rapport au sol, c'est-à-dire l'angle que fait l'axe longitudinal dudit aéronef avec la composante horizontale du vecteur vitesse de cet aéronef. L'affichage à cristaux liquides pourrait être rétro-éclairé et être de couleur claire lorsque l'avion vole en ligne droite. Puis, l'affichage à cristaux liquides pourrait s'assombrir progressivement depuis son centre vers la gauche ou vers la droite selon que l'aéronef s'écarte de sa trajectoire rectiligne par la gauche ou par la droite. De même, on pourrait prévoir deux écrans d'affichage de forme rectiligne allongée 4 et 5 disposés verticalement indiquant l'angle d'inclinaison des ailes de l'aéronef par rapport à l'horizontale. Ces écrans pourraient être rétro-éclairés et être de couleur claire lorsque l'avion vole à l'horizontale. Puis l'un des deux écrans s'assombrirait progressivement depuis le haut selon que les ailes de l'appareil s'inclinent vers la droite ou vert la gauche.

## Revendications

1. Instrument d'aide à la navigation équipant un aéronef (1) mû uniquement par l'énergie solaire, cet instrument d'aide à la navigation étant prévu pour aider le pilote de l'aéronef (1), cet instrument d'aide à la navigation comprenant un premier dispositif d'affichage (R3) s'étendant horizontalement sur le tableau de bord (2) de l'aéronef (1), le centre de ce dispositif d'affichage matérialisant l'axe longitudinal (X) de l'aéronef, un marqueur mobile apte à se déplacer de part ou d'autre du centre du premier dispositif d'affichage (R3) indiquant la direction de vol de l'aéronef par rapport au sol, c'est-à-dire l'angle que fait l'axe longitudinal dudit aéronef avec la composante horizontale du vecteur vitesse de cet aéronef, l'angle étant positif du côté droit du pilote lorsque celui-ci regarde le nez de l'aéronef, le marqueur mobile étant d'autant plus éloigné du centre du dispositif d'affichage (R3) que la direction de vol de l'aéronef est écartée de la direction rectiligne qui doit l'amener au seuil d'une piste, le premier dispositif d'affichage (R3) comprenant au moins deux diodes (D1) disposées de part et d'autre de son centre, la résolution de l'angle à afficher par le premier dispositif d'affichage (R3) étant de ± 1° par rapport à la direction de vol rectiligne qui doit amener l'aéronef au seuil de la piste, une diode (D1) étant prévue pour chaque degré de déviation.

2. Instrument d'aide à la navigation selon la revendication 1, **caractérisé en ce que** le premier dispositif d'affichage (R3) fournit une indication relative à la direction de vol de l'aéronef par rapport au sol comprise entre -15° et +15°.

3. Instrument d'aide à la navigation selon l'une quelconque des revendications 1 ou 2, **caractérisé en ce que** le premier dispositif d'affichage (R3) comprend une rangée de diodes électroluminescentes (D1), le centre de cette rangée de diodes (D1) matérialisant l'axe longitudinal (X) de l'aéronef, une diode de la rangée de diodes (D1) s'éclairant à droite ou à gauche du centre de ladite rangée pour indiquer au pilote la direction de vol de l'aéronef par rapport au sol.

4. Instrument d'aide à la navigation selon la revendication 3, **caractérisé en ce qu'**une diode de la rangée de diodes (D1) indique un écart d'un degré entre l'axe longitudinal (X) de l'aéronef et la composante horizontale du vecteur vitesse de cet aéronef.

5. Instrument d'aide à la navigation équipant un aéronef (1) mû uniquement par l'énergie solaire, cet instrument d'aide à la navigation étant prévu pour aider le pilote de l'aéronef (1), cet instrument d'aide à la navigation comprenant un premier dispositif d'affichage (R3) s'étendant horizontalement sur le tableau de bord (2) de l'aéronef (1), le centre de ce dispositif d'affichage matérialisant l'axe longitudinal (X) de l'aéronef, un marqueur mobile apte à se déplacer de part ou d'autre du centre du premier dispositif d'affichage (R3) indiquant la direction de vol de l'aéronef par rapport au sol, c'est-à-dire l'angle que fait l'axe longitudinal dudit aéronef avec la composante horizontale du vecteur vitesse de cet aéronef, l'angle étant positif du côté droit du pilote lorsque celui-ci regarde le nez de l'aéronef, le marqueur mobile étant d'autant plus éloigné du centre du dispositif d'affichage (R3) que la direction de vol de l'aéronef est écartée de la direction rectiligne qui doit l'amener au seuil d'une piste, le premier dispositif d'affichage (R3) étant formé par une cellule d'affichage à cristaux liquides (3) qui est à l'état clair lorsque l'aéronef vole en ligne droite et qui s'assombrit depuis son centre vers la gauche ou vers la droite selon que la direction de vol de l'aéronef s'écarte de sa trajectoire rectiligne par la gauche ou par la droite, la résolution de l'affichage fourni par la cellule d'affichage à cristaux liquides (3) étant d'au moins ± 1°.

## Patentansprüche

1. Navigations-Hilfsinstrument zur Ausstattung eines ausschließlich durch Sonnenenergie betriebenen Luftfahrzeugs (1), wobei dieses Navigations-Hilfsinstrument zur Unterstützung des Luftfahrzeugführers des Luftfahrzeugs (1) vorgesehen ist, wobei dieses Navigations-Hilfsinstrument eine erste Anzeigevorrichtung (R3) umfasst, die sich horizontal über die Instrumententafel (2) des Luftfahrzeugs (1) erstreckt, und die Zentrale dieser Anzeigevorrichtung die Längsachse (X) des Luftfahrzeugs realisiert, wobei eine bewegliche Markierung, die geeignet ist, sich beiderseits der Zentralen der ersten Anzeigevorrichtung (R3) zu bewegen, die Flugrichtung des Luftfahrzeugs in Bezug auf den Boden angibt, d. h. den Winkel, den die Längsachse des Luftfahrzeugs mit der horizontalen Komponente des Geschwindigkeitsvektors des Luftfahrzeugs bildet, wobei der Winkel auf der rechten Seite des Luftfahrzeugführers positiv ist, wenn dieser auf die Luftfahrzeugnase blickt, wobei die bewegliche Markierung umso weiter von der Zentralen der Anzeigevorrichtung (R3) entfernt ist, je mehr die Flugrichtung des Luftfahrzeugs von der geraden Richtung abweicht, die es an die Schwelle einer Landebahn bringen soll, wobei die erste Anzeigevorrichtung (R3) mindestens zwei Dioden (D1) umfasst, die zu beiden Seiten ihres Zentrums angeordnet sind, und die Auflösung des von der ersten Anzeigevorrichtung (R3) anzuzeigenden Winkels ±1° in Bezug auf die gerade Flugrichtung ist, die das Luftfahrzeug an die Schwelle einer Landebahn bringen soll, wobei für jedes Grad der Abweichung eine Diode (D1) vorgesehen ist.

2. Navigations-Hilfsinstrument nach Anspruch 1, **dadurch gekennzeichnet, dass** die erste Anzeigevorrichtung (R3) eine Angabe bezüglich der Flugrichtung des Luftfahrzeugs in Bezug auf den Boden liefert, die im Bereich von -15° bis +15° liegt.

3. Navigations-Hilfsinstrument nach einem der Ansprüche 1 oder 2, **dadurch gekennzeichnet, dass** die erste Anzeigevorrichtung (R3) eine Reihe von Leuchtdioden (D1) aufweist, wobei das Zentrum dieser Diodenreihe (D1) die Längsachse (X) des Luftfahrzeugs bildet, wobei eine Diode der Diodenreihe (D1) rechts oder links vom Zentrum der Reihe leuchtet, um dem Luftfahrzeugführer die Flugrichtung des Luftfahrzeugs in Bezug auf den Boden anzugeben.

4. Navigations-Hilfsinstrument nach Anspruch 3, **dadurch gekennzeichnet, dass** eine Diode der Diodenreihe (D1) eine Differenz von einem Grad zwischen der Längsachse (X) des Luftfahrzeugs und der horizontalen Komponente des Geschwindigkeitsvektors dieses Luftfahrzeugs angibt.

5. Navigations-Hilfsinstrument zur Ausstattung eines ausschließlich durch Sonnenenergie betriebenen Luftfahrzeugs (1), wobei dieses Navigations-Hilfsinstrument zur Unterstützung des Luftfahrzeugführers des Luftfahrzeugs (1) vorgesehen ist, dieses Navigations-Hilfsinstrument eine erste Anzeigevorrichtung (R3) umfasst, die sich horizontal über die Instrumententafel (2) des Luftfahrzeugs (1) erstreckt, und die Zentrale dieser Anzeigevorrichtung die Längsachse (X) des Luftfahrzeugs bildet, wobei eine bewegliche Markierung, die geeignet ist, sich beiderseits der Zentralen der ersten Anzeigevorrichtung (R3) zu bewegen, die Flugrichtung des Luftfahrzeugs in Bezug auf den Boden angibt, d. h. den Winkel, den die Längsachse des Luftfahrzeugs mit der horizontalen Komponente des Geschwindigkeitsvektors dieses Luftfahrzeugs bildet, wobei der Winkel auf der rechten Seite des Luftfahrzeugführers positiv ist, wenn dieser auf die Luftfahrzeugnase blickt, wobei die bewegliche Markierung umso weiter von der Zentralen der Anzeigevorrichtung (R3) entfernt ist, je mehr die Flugrichtung des Luftfahrzeugs von der geraden Richtung abweicht, die es an die Schwelle einer Landebahn bringen soll, wobei die erste Anzeigevorrichtung (R3) durch eine Flüssigkristallanzeigezelle (3) gebildet ist, die hell ist, wenn das Luftfahrzeug in einer geraden Linie fliegt, und die sich ausgehend von ihrer Zentrale nach links oder nach rechts verdunkelt, je weiter die Flugrichtung des Luftfahrzeugs von seiner geraden Bahn nach links bzw. nach rechts abweicht, wobei die Anzeigeauflösung, die von der Flüssigkristallanzeigezelle (3) bereitgestellt wird, mindestens ±1° beträgt.

## Claims

1. Navigation aid instrument for an aircraft (1) powered only by solar energy, this navigation aid instrument being intended to assist the pilot of the aircraft (1), this navigation aid instrument including a first display device (R3) that extends horizontally on the instrument panel (2) of the aircraft (1), wherein the centre of said display device embodies the longitudinal axis (X) of the aircraft, a mobile marker can move on either side of the centre of the first display device (R3) indicating the flight direction of the aircraft relative to the ground, i.e. the angle formed by the longitudinal axis of said aircraft and the horizontal component of the velocity vector of said aircraft, wherein the angle is positive on the right side of the pilot when said pilot is looking at the nose of the aircraft, and the mobile marker is further away from the centre of the display device (R3) the more the flight direction of the aircraft has drifted from the rectilinear flight direction that will lead said aircraft to the threshold of a runway, the first display device (R3) including at least two diodes (D1) arranged on either side of the centre thereof, the resolution of the angle to be displayed by the first display device (R3) is ± 1° relative to the rectilinear flight direction that will lead the aircraft to the runway threshold, one diode (D1) being provided for each degree of drift.

2. Navigation aid instrument according to claim 1, **characterized in that** the first display device (R3) supplies an indication relating to the aircraft flight direction relative to the ground comprised between -15° and +15°.

3. Navigation aid instrument according to any of claims 1 or 2, **characterized in that** the first display device (R3) includes a row of light emitting diodes (D1), wherein the centre of said row of diodes (D1) embodies the longitudinal axis (X) of the aircraft, and one diode in the row of diodes (D1) lights up to the right or left of the centre of said row to indicate to the pilot the flight direction of the aircraft relative to the ground.

4. Navigation aid instrument according to claim 3, **characterized in that** one diode in the row of diodes (D1) indicates a difference of one degree between the longitudinal axis (X) of the aircraft and the horizontal component of the velocity vector of said aircraft.

5. Navigation aid instrument for an aircraft (1) powered only by solar energy, this navigation aid instrument being intended to assist the pilot of the aircraft (1), this navigation aid instrument including a first display device (R3) that extends horizontally on the instrument panel (2) of the aircraft (1), wherein the centre of said display device embodies the longitudinal axis (X) of the aircraft, a mobile marker can move on either side of the centre of the first display device (R3) indicating the flight direction of the aircraft relative to the ground, i.e. the angle formed by the longitudinal axis of said aircraft and the horizontal component of the velocity vector of said aircraft, wherein the angle is positive on the right side of the pilot when said pilot is looking at the nose of the aircraft, and the mobile marker is further away from the centre of the display device (R3) the more the flight direction of the aircraft has drifted from the rectilinear flight direction that will lead said aircraft to the threshold of a runway, the first display device (R3) being formed by a liquid crystal display cell (4, 5) which is in a light coloured state when the aircraft is flying in a straight line and which gradually gets darker from the centre thereof towards the left or towards according to whether the flight direction of the aircraft is moving away from the rectilinear path to the left or right, the resolution of the display provided by the liquid crystal display device (3) being at least ± 1°.
